(19) Europäisches Patentamt European Patent Office Office européen des brevets

(11) **EP 3 303 870 B1**

(12) **EUROPEAN PATENT SPECIFICATION**

(45) Date of publication and mention of the grant of the patent:
**18.08.2021 Bulletin 2021/33**

(21) Application number: **16727977.7**

(22) Date of filing: **27.05.2016**

(51) Int Cl.:
*F16D 65/092* *(2006.01)*     *F16D 66/00* *(2006.01)*

(86) International application number:
**PCT/EP2016/062045**

(87) International publication number:
**WO 2016/189150 (01.12.2016 Gazette 2016/48)**

(54) **BRAKING DEVICE FOR VEHICLES COMPRISING A CONDITIONER FOR CONDITIONING THE ELECTRICAL SIGNAL COMING FROM AT LEAST ONE PIEZOCERAMIC SENSOR OF THE BRAKING DEVICE**

BREMSVORRICHTUNG FÜR FAHRZEUGE MIT EINEM KONDITIONIERER ZUR KONDITIONIERUNG DES ELEKTRISCHEN SIGNALS AUS MINDESTENS EINEM PIEZOKERAMISCHEN SENSOR DER BREMSVORRICHTUNG

DISPOSITIF DE FREINAGE POUR VÉHICULES COMPRENANT UN CONDITIONNEUR DESTINÉ À CONDITIONNER LE SIGNAL ÉLECTRIQUE PROVENANT D'AU MOINS UN CAPTEUR PIÉZO-CÉRAMIQUE DU DISPOSITIF DE FREINAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2015 IT UB20151184**

(43) Date of publication of application:
**11.04.2018 Bulletin 2018/15**

(73) Proprietor: **ITT Italia S.r.l.**
**20020 Lainate (IT)**

(72) Inventors:
• **DONZELLI, Daniele**
  **10062 Luserna San Giovanni (Torino) (IT)**
• **SOLARI, Mattia**
  **12032 Barge (Cuneo) (IT)**
• **TERRANOVA, Marco**
  **10149 Torino (IT)**
• **SERRA, Stefano**
  **10060 San Pietro Val Lemina (TO) (IT)**
• **MARTINOTTO, Luca**
  **20025 Legnano (Milano) (IT)**

(74) Representative: **Rapisardi, Mariacristina**
  **Ufficio Brevetti Rapisardi S.r.l.**
  **Via Serbelloni, 12**
  **20122 Milano (IT)**

(56) References cited:
JP-A- H1 194 707     US-A- 5 719 577
US-A1- 2014 311 833     US-B1- 6 204 786

**Description**

The present invention relates to a braking device comprising a conditioner for conditioning the electrical signal coming from at least one piezoceramic sensor.

From the Italian patent application No. TO2013A307 a brake pad for vehicles is known, comprising a metallic support element, a block of friction material supported by the metallic support element, and one or more piezoceramic sensors supported by the metallic support element and interposed between the block of friction material and the metallic support element.

During use the piezoceramic sensors, when subjected to mechanical stress due to the interaction between the block of friction material and the disc bound to the wheel, generate an electrical signal which is conditioned for the detection and/or for the prediction of numerous phenomena, which can go from an abnormal consumption of the brake pads, due to said brake pads "touching" the disc even when the brake is not actuated, for example due to poor alignment of the brake calipers, or rather noise, vibration and unwanted screeching during braking.

In various fields of the prior art the conditioning of the electrical signal of piezoelectric sensors is typically achieved by means of charge amplifiers that are located near to the piezoelectric sensors.

These charge amplifiers however could not survive the scope of this invention due to the very high operating temperatures (greater than 350 °C).

There is, among other things, the inconvenience of having to apply effective shielding against external disturbances due to the very high impedance of the piezoelectric sensors. The implementation of proper screening is however both complex and costly. Also the electronic circuitry required for a charge amplifier is usually complex and requires electrical circuits and therefore circuit boards of a certain size. This fact implies appropriate installation spaces that are not readily available near to the brake pads.

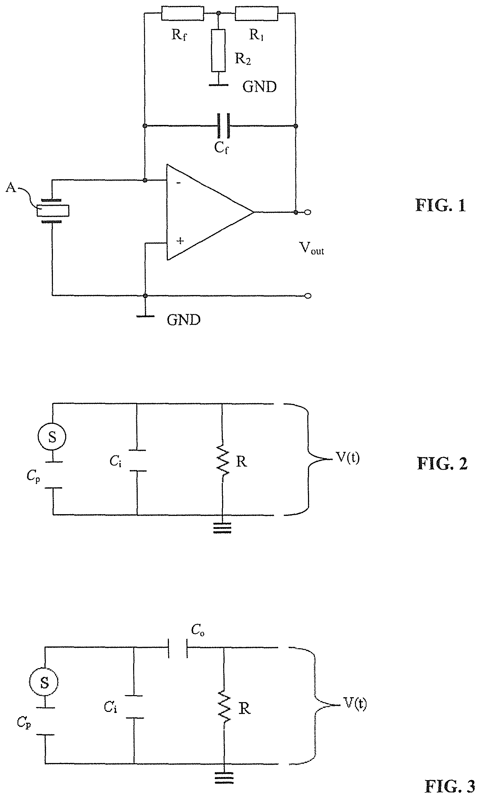

An example of a conventional charge amplifier used for conditioning the electrical signal of a piezoelectric sensor is shown in Figure 1, where the sensor is indicated with A. Normally the active conditioning circuit consists of one or more high-gain voltage amplifiers (inverting configuration) with MOS or MOSFET inputs. In such a case, thanks to the presence within the circuit of a capacitor, the charge amplifier acts as a charge integrator by means of balancing the variations in the charge coming from the piezoelectric sensor due to the mechanical stresses to which it is subject, by inducing equal variations in charge, but opposite in sign, on the measurement capacitor, and providing at the output of the conditioning circuit a voltage $V_{out}$ which can be measured by a capture board. The charge amplifier is characterized by a large bandwidth. In the case of the circuit shown said bandwidth can be increased by increasing the low frequency bandwidth thanks to the fact that the cut-off frequency at low frequencies $v_L$ will be given by the following relationship:

$$v_L = \frac{1}{2\pi \left(1 + \frac{R_1}{R_2}\right) R_f C_f}$$

By means of a modification to the ratio of the resistors R1 to R2, the cut-off frequency can be changed without using resistance values for $R_f$ that are too large and that could lead to saturation problems, or else too great an offset due to too large a bias current within the charge amplifier itself. In addition the capacitance $C_f$ can be kept low enough to maintain the high sensitivity of the circuit during the variations in charge at the piezoelectric sensor. A technological problem that is usually very difficult to resolve however is that of all of the necessary requirements coinciding in order to have a charge amplifier that has very low values of $v_L$ (close to 1Hz), and at the same time maintaining high stability with high sensitivity and low drift over long periods of time.

In the field of braking devices for vehicles the signals of interest range from very low frequencies (1-2 Hz) up to high values (20-30 kHz), thus presenting very difficult to solve technical issues due to the high demand for accuracy and the absence of drifting over time periods of even several minutes.

Document JP H11 94707 discloses a braking device comprising a vibration and force detecting circuit using piezoelectric elements.

Document US2014/311 833 A discloses a braking device with integrated piezoceramic sensors.

The technical task of the present invention is to provide a conditioner for conditioning the electrical signal coming from at least one piezoceramic sensor of a braking device for vehicles and a braking device for vehicles that integrates such a conditioner for conditioning the electrical signal that together eliminate the inconveniencies known of in the prior art.

As part of this technical task, one purpose of the present invention is to provide a system for the conditioning of the electrical signal coming from at least one piezoceramic sensor of a braking device for vehicles that exhibits high stability, sensitivity and measurement accuracy in the absence of drifting over long periods of time.

Another purpose of the present invention is to provide a conditioner for conditioning the electrical signal coming from at least one piezoceramic sensor of a braking device for vehicles that is simple, economical, compact and resistant to high temperatures to be installed in the region of the sensor itself.

These and other purposes are fulfilled by a braking device for vehicles according to claim 1.

In a preferred embodiment of the invention said charge derivative circuit includes a resistor that is placed in parallel with the piezoceramic sensor.

In a preferred embodiment of the invention said charge derivative circuit also includes an AC coupling capacitance between the piezoceramic sensor and said resistor. stage.

Further characteristics and advantages of the present invention will become clear from the following description of a system for the conditioning of the electrical signal of a piezoceramic sensor of a braking device for vehicles, given purely by way of example and with reference to the drawings attached, in which:

Figure 1 schematically illustrates a state of the art active conditioning circuit comprising a charge amplifier;
Figure 2 shows a first adoptable solution for the passive conditioning circuit that forms the analog stage of the signal conditioner;
Figure 3 shows a second adoptable solution for the passive conditioning circuit that forms the analog stage of the signal conditioner;

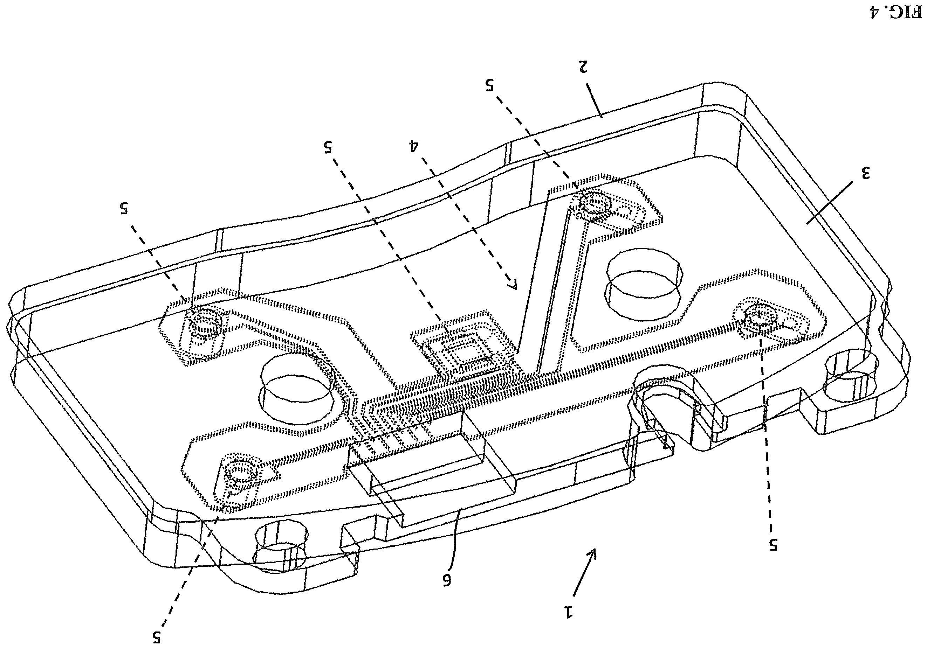

Figure 4 schematically shows a sensorized brake pad according to a first embodiment of the invention;
Figures 5a to 5g show different embodiments of the full scheme of the conditioner;

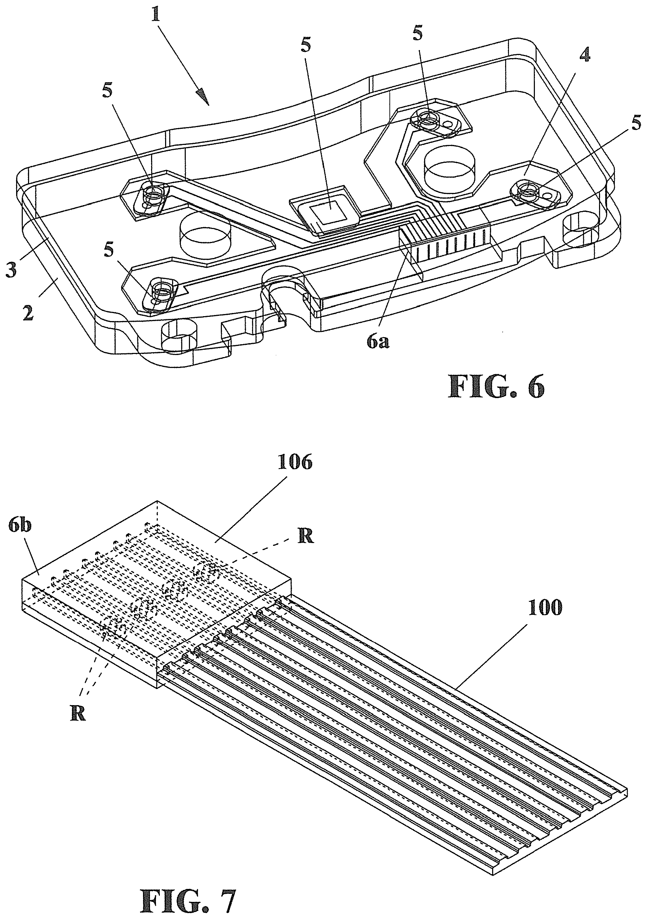

Figure 6 shows the braking pad with passive analog stage integrated in the support element through the connector of the electrical circuit;
Figure 7 shows the cable of the braking pad of figure 6;

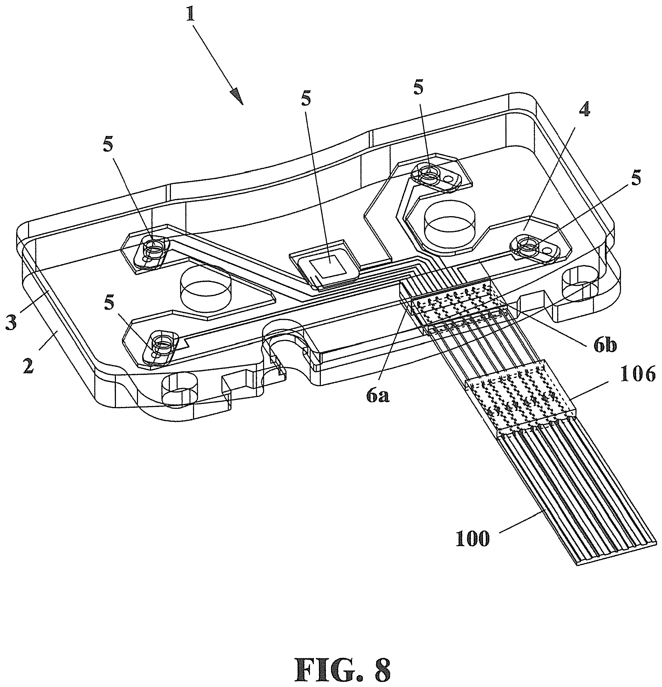

Figure 8 shows the braking pad with passive analog stage integrated in the cable;

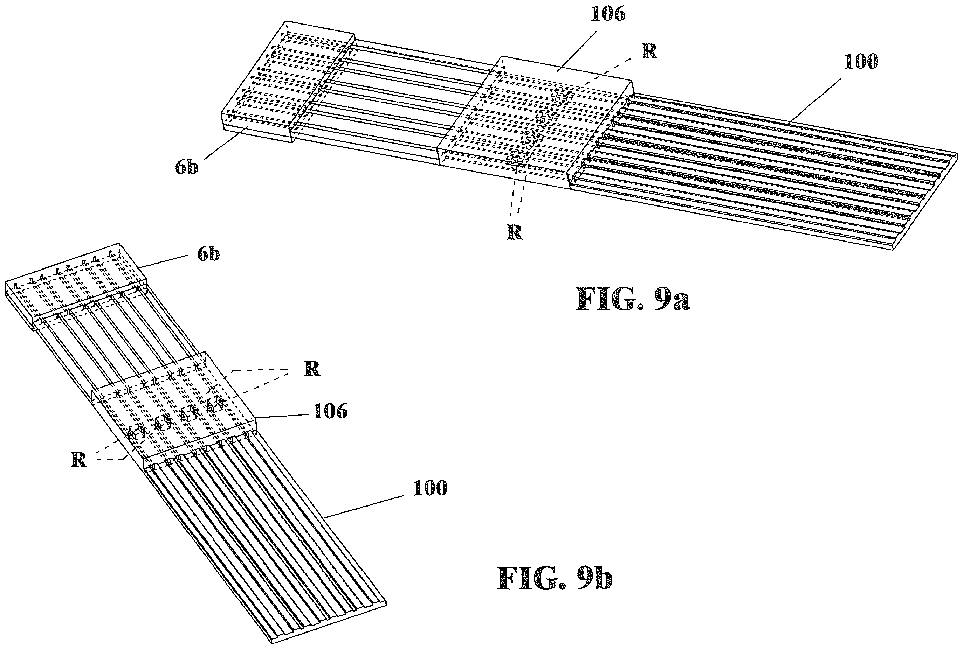

Figure 9a and 9b show the cable of the braking pad of figure 8.

With reference to the figures a sensorized braking device for vehicles is referenced as a whole with 1, in the example illustrated a brake pad, intended to equip a vehicle braking system, known in the art and not shown for the sake of simplicity. Herein and below, specific reference will be made to a braking device consisting of the brake pad 1, but it is clear that as much as will be stated herein also applies identically to a brake shoe of a drum brake.

The brake pad 1 comprises a support element 2, preferably but not necessarily metallic, and known as a "backplate", a block of friction material 3 supported by said support element 2, optionally a damping underlayer applied to the block of friction material 3, an electrically isolated electrical circuit 4 supported by the support element 2 and interposed between the latter and the block of friction material.

The free surface of the block of friction material 3 is intended in use to come into sliding contact with the element to be braked, typically the brake disc of a vehicle wheel.

The electrical circuit 4 has one or more piezoceramic sensors 5 that are able to detect the forces that are exchanged in use during the contact between the pad 1 and the element to be braked as a result of their inherent ability to emit an electrical signal when subjected to a mechanical stress.

The electrical circuit 4 collects the electrical signal, which is generated without the need for an electrical power supply, from the piezoceramic sensors 5 when they are subjected to a mechanical stress.

The brake pad 1 also comprises a connector 6 which is preferably integrated into the support element 2 to which an electric cable 100 is connected or connectable for transferring the electrical signal.

As will be clearer later a wireless communication channel for transferring the electrical signal may be envisaged as well according a different embodiment of the invention.

The braking device has a conditioner for conditioning the electrical signal coming from the piezoceramic sensors 5 comprising advantageously a passive analog stage for measuring the signal and a digital stage for processing the output signal from the analog stage.

The digital stage is a digitization stage for the output signal from the analog stage and an integration stage for the digitized signal.

The passive components used for the analog stage are robust and compact and thus allow for easy integration of the analog stage into the braking device while ensuring the necessary bandwidth requirements.

The passive analog stage for measurement comprises a charge derivate circuit having a resistor that is placed in parallel with the piezoceramic sensor, and can further comprise an AC coupling capacitor between the piezoceramic sensor and the resistor.

With reference to figure 2, an example of a passive conditioning circuit is proposed that forms the analog stage of the conditioner for conditioning the electrical signal. In practice the voltage source V and the capacitor $C_p$ represent a simplified variant of the equivalent circuit of a piezoelectric sensor; $C_i$ is a parasitic capacitance due mainly to the wiring, while R is a resistance placed in parallel with the piezoceramic sensor. This electrical circuit transforms the charge signal Q(t) to a voltage signal V'(t) (discharge current passing through the resistance R from the piezoceramic sensor), and can be customized in order to provide a large enough signal to be processed by the digital stage. The proposed circuit also has the advantage of being virtually free of significant drifting and is intrinsically linked in its operation to the charge accumulated at the piezoceramic sensor, and in particular to its derivative over time. The conditioning circuit allows the piezoceramic sensor discharge rate to be regulated by means of a simple change in the resistance R, but with all the advantages that this implies in terms of robustness and reliability at high temperatures due to the fact that it is passive. The analog stage thus implemented optimizes the response of the sensor and constitutes a natural single pole high pass filter.

With reference to figure 3, a further example of a passive conditioning circuit is proposed that forms the analog stage of the conditioner for conditioning the electrical signal. The only difference compared to the previous conditioning circuit consists in the inclusion of the capacitance $C_o$ which is arranged in series with the resistor R. The response of this circuit will be very similar to that of the previously shown circuit and will have another first order pole at the frequency $1/RC_o$, but will ensure the elimination of all frequencies below this value and in particular the DC components. By appropriately selecting R and $C_o$ a desired low cut-off frequency can be very easily obtained (typically about 2 Hz, which is close to the optimal 3-4 Hz frequency of the cut-off frequencies).

The very flat frequency response above the cut-off frequency makes the circuit ideal for noise analysis having virtually no distortion above this cut-off frequency which, among other things, can be selected very easily at the desired value simply by choosing a suitable value for the resistance R. The commonly required values for the resistance R are in the order of 1-20 MOhm, which when coupled to the typical values of capacitance of piezoceramic sensors of around 2-3 nF, will produce the desired cut-off frequencies of 1-10 Hz. This range of cut-off frequencies is ideal for retaining the most important information relating to the braking dynamics, while maintaining a sufficiently high signal intensity in terms of dynamic range to be detectable without any problem.

In both cases these simple conditioning circuits are very compact and passive, and are therefore compatible with relatively simple integration with the brake pad. Furthermore, this configuration directly provides an amplified voltage signal. In this way, a transformation of the signal from current to voltage as close as possible to the current source itself (the piezoceramic sensor) contributes significantly to reducing the impact of external disturbances (and increases the S/N ratio), which is a factor of merit of extreme importance for all conditioning circuits for high impedance sensors such as piezoceramic sensors. In this respect a further contribution may be provided by the adding, for both of the conditioning circuit examples above, an inverting buffer that is located not too far from the passive conditioning circuit in order to decouple the disturbances coming from the stages of the signal conditioner.

In particular the buffer decouples the disturbances noise contribution from the cable and from the connector and contributes to immunity from external EM interference. The conditioning circuit, being completely passive, is suitable for being integrated in the immediate vicinity of the piezoceramic sensor, with the result of minimizing external disturbances.

In an embodiment not forming part of the invention the passive conditioning circuit can be integrated directly onto the support element 2. For example a special mechanical extension of the mechanical support element 2 could be included which would be thermally decoupled from the block of friction material 3, where the passive conditioning circuit is integrated by means of a PCB electrical circuit or by screen printing it onto the support element 2.

According to the invention the passive conditioning circuit is be integrated into the support element through the connector. Such a configuration is thermally decoupled with respect to the brake pad 1, but at the same time, given its proximity to said brake pad, it has the advantages of the previous solution. In practical terms the integration of the passive conditioning circuit is achieved by adding a small PCB to the connector.

Another alternative according to the invention the passive conditioning circuit is be integrated externally the support element but in the immediate vicinity of the connector itself, for instance by adding a small PCB to the electric cable connectable to the brake pad 1 for transferring the electrical signal.

Coming to the discussion and analysis of the signals associated with the electrical conditioning circuits proposed, we will refer in particular for the sake of simplicity to the conditioning circuit depicted in Figure 2. The other conditioning circuits still produce similar types of signals in terms of the response of the sensors because the major differences will be found at low frequencies (i.e. below 2Hz due for example to the ac coupling of the series capacitor) or at high frequencies (well above 20KHz) because of the low pass filtering due to the buffer itself or to the piezoceramic sensor, which, however, are normally positioned above 10kHz and so do not normally produce serious differences for typical signals with principal components that are well below these frequencies. In figure 2 the capacitor $C_p$ has one electrode that may be held at ground potential and another electrode which provides the signal. In this way the charge induced by an external mechanical stress $\pi(t)$ will induce a charge on the piezoceramic sensor. Due to the fact that the circuit is tied to ground by means of the resistance R, the piezoceramic sensor will discharge quickly. The result will be a time variant voltage that is seen across the resistance R caused by the piezoceramic sensor discharge current. The external mechanical stress $\pi(1)$ will therefore act as an electromotive force, for which reason it is hereby represented as a time variant voltage S. Solving the differential equations of the equivalent circuit with respect to the output voltage V(t), considering that the two parallel capacitances $C_p$ and $C_t$ are equivalent to a single capacitance $C = C_p + C_i$, and considering that the force during braking is in the form of a step function, in other words it begins at a certain instant $t_0$ and ends at

a second instant $t_1$, and remains constant during this period and equal to F, we arrive at $V(t)$:

$$V(t) = R \frac{dQ}{dt}$$

$$t < 0 \qquad V(t) = 0$$

$$0 < t < t_1 \qquad V(t) = -\frac{d_p \cdot F}{C} \cdot e^{-t/RC}$$

$$t \geq t_1 \qquad V(t) = -\frac{d_p \cdot F}{C} \cdot e^{-t/RC} + \frac{d_p \cdot F}{C} \cdot e^{-(t-t_1)/RC}$$

Where $d_p$ is a constant that depends upon the piezoceramic sensor.

The equation given above for V(t) states that the pressure signal during braking and having the previously shown step function form, induces signals within the chosen circuit in the form of a double peak, one positive and one negative, that represent the beginning and end of the braking event. The peak heights will be proportional to the applied force F and circuit parameters of the circuit employed. The exponential decay of the signal is clearly related to the discharging of the capacitor which within the circuit represents the piezoceramic sensor. It follows that the dynamic behavior of the sensor can be changed simply by increasing or decreasing the value of the resistance R. In particular, decreasing the value of R will make the circuit response faster, but on the other hand will make the amplitude of the response smaller due to the increase in the circuit's natural cut-off frequency. From the time dependence of the equivalent circuit it is clear that the dynamics of the sensor connected to the circuit employed for the conditioning will be linked to the derivative over time of the charge induced at the sensor itself due to the mechanical stress that the sensor is placed under. This is evident from the form of the frequency dependence of the load itself:

$$Q(\omega) = -\frac{d_p \cdot \Pi(\omega)}{RC} \cdot \frac{1}{j\omega + \frac{1}{RC}}$$

where $\omega$ is the frequency and $\pi(\omega)$ is the Fourier transform (FFT) of $\pi(t)$,

Outside the cut-off frequency region, the charge induced will be directly proportional to the current flowing in the circuit.

The response of the sensor over time is the derivative over time of the charge stored within it and will be dominated by the natural discharge process of the RC circuit associated with the circuit proposed.

This last point is particularly interesting and suggests a method for recuperating the full information regarding the charge and its variations, and which confers the equivalence in principle and in practice with the information that can be obtained from a traditional active conditioning circuit comprising a charge amplifier.

In fact, thanks to the fact that the proposed circuit is intrinsically of a derivative nature, and therefore diametrically opposite to a charge amplifier which is by nature integrative, the digital stage of the conditioner calculates the information regarding the charge by means of a numerical integration of the signal obtained by the analog stage. The result obtained is directly linked to the total charge accumulated at the sensor during braking and to the variations at the sensor which are associated with the applied forces, which will be seen by the sensor in the form of currents flowing in the circuit itself. The numerical integration of the signal will therefore then lead to the recovery of the same information that can be obtained with a fully hardware based solution provided by a conventional charge amplifier. In the solution proposed the traditional active circuit of the charge amplifier is therefore replaced by two stages: a hardware analog measurement stage based upon a passive conditioning circuit, followed by a digital stage for the digitization and integration of the digitized signal.

The integration can be performed in real time in order to promptly intercept variations in the forces during braking (that is to say of the charge on the sensor), or else it can be performed subsequently.

The integration can be performed numerically using a software device or else it can be performed by a hardware device, for example with FPGA, CMOS technology etc. The signal conditioner provided by the present invention operates differently from a conventional charge amplifier in that it separates an analog stage from a digital stage, which digital stage can be located remotely from the analog stage. This approach gives the advantage of having a much more simplified, compact and passive analog stage rather than the active and complex stage that would result from a traditional charge amplifier. It follows that the circuit can be easily miniaturized and integrated into brake pads with advantages in terms of cost and the signal-to-noise ratio (immunity to external disturbances).

In conclusion, the sensor signal conditioning method involves the integration of the signal coming from a simple passive "derivative" circuit. The integration is performed in a computational stage which directly integrates the appropriately digitized signal that is directly associated with the charge on the piezoceramic sensor and therefore the forces acting upon said sensor.

The conditioning circuit is located in proximity to the sensors in order to intercept and transform the voltage signal without said signal having to travel too far. This is important as regards improving the accuracy and the signal-to-noise ratio S/N, also regarding the fact that the piezoceramic sensor, due to its high impedance, will be hugely affected by any disturbance within the conditioning circuit.

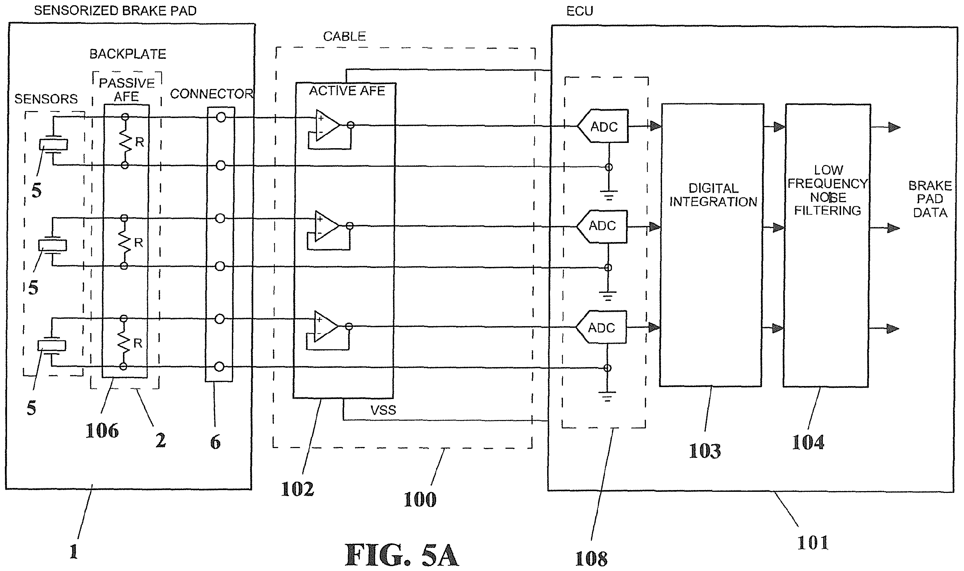

With reference to figures 5a to 5g, full exemplificative schemes of conditioner are shown.

The conditioner has an analog stage and a digital stage.

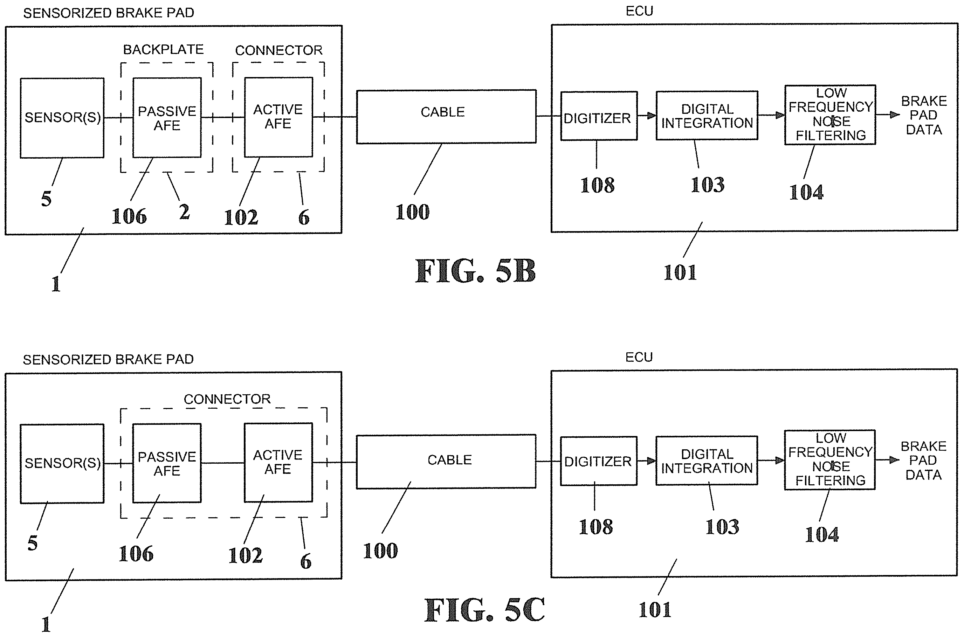

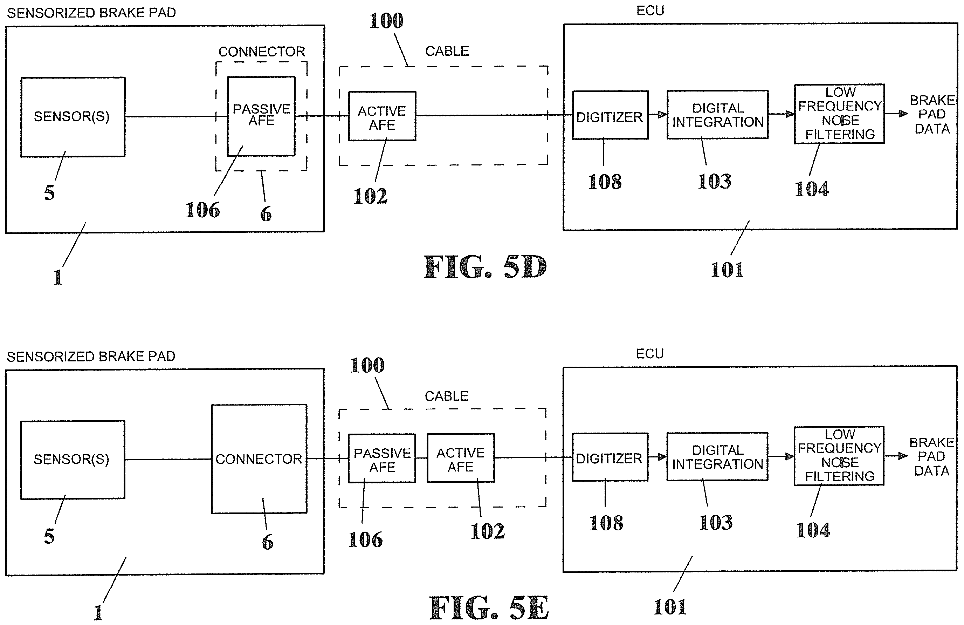

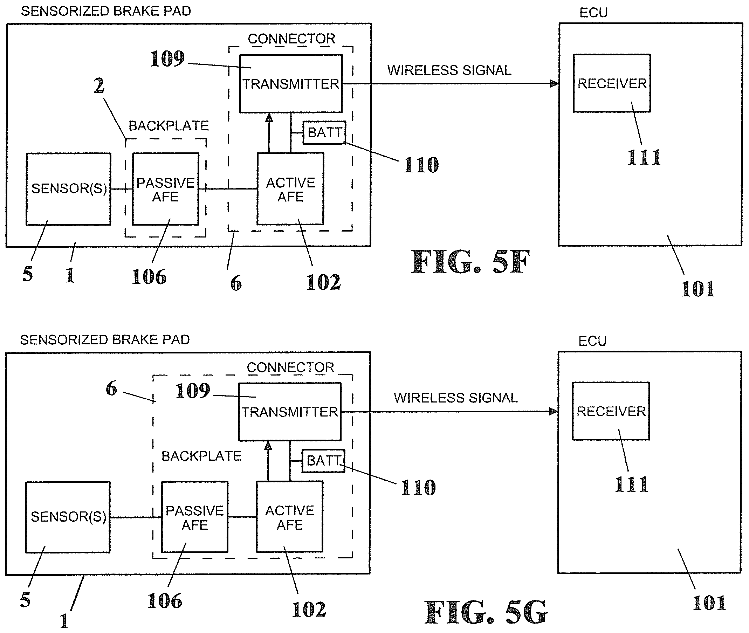

The analog stage and the digital stage may be mutually connected by the electric cable 100 (figures 5a, 5b, 5c, 5d, 5e) or may have a wireless mutual connection provided by a transmitter 109 powered by a battery 110 installed in the brake pad 1 and a receiver 111 installed in the ECU 101 (figures 5f, 5g).

The analog stage comprises the hereinabove referred passive analog stage and an active analog stage.

The passive analog stage 106 is also labelled in figures 5a -5g as passive Analog Front End (passive AFE), while the active analog stage 102 is also labelled in figures 5a -5g as active Analog Front End (active AFE).

The passive analog stage 106 of the analog stage is placed at or as close as possible to the braking pad 1.

Therefore, as said, the passive analog stage 106 of the analog stage may be integrated either in the backplate 2 (figures 5a, 5b, 5f), or in the connector 6 (figures 5c, 5d, 5g), or in the cable 100 (figure 5e).

The passive analog stage 106 is composed by purely passive components (for instance a resistor of about 10 MOhm) closed to the ground.

In case of wired communication through the cable 100 between the analog stage and the digital stage of the conditioner, the ground of the piezoelectric sensors 5 may be provided by the cable 100 itself (see for instance figure 5a), because the circuit on the screen printing is completely insulated from the backplate 2. In more detail, to avoid current loops, the ground of the ECU is the same for all the piezoceramic sensors 5 and is connected by the ground of the vehicle through a small resistance (for instance of about 1 kOhm).

The active analog stage includes the above mentioned buffer(s) and is located in between the passive analog stage and the digital stage.

The passive components of the passive analog stage 106, if they are integrated in the backplate 2, may be implemented by using the high temperature screen printing. This may be done either by direct screen printing upon the backplate or integrating a thin circuit or a thin substrate (< 1mm, preferably 100-200 mm) including a screen printed circuit instead of direct screen printing upon the backplate, and soldering it to the backplate. The wiring is directly connected to the flying portion of the connector 6 by soldering to the pin of the connector 6 or by crimping on the pins. Another possibility is a direct welding to the screen printing by exploiting some conductive pads created to this purpose on the screen printing on the backplate.

The passive components of the passive analog stage 106, if they are integrated in the cable 100 or in the connector 6, may be installed into a PCB. This PCB, depending on how close they are to the braking pad 1, could be a ceramic PCB (Alumina for example) with circuit screen printed on the face. If the thermal decoupling is good enough to prevent raise of temperature above 200 $^0$C, other less noble material can be used for PCB material like FR4 for instance.

The active analog stage 102 stage may be integrated either in the cable 100 (figures 5a, 5d, 5e), or in the connector 6 (figures 5b, 5c, 5f, 5g).

Indeed, the active analog stage 102 requires operative temperature to be kept lower than 125 C to avoid thermal ageing of the electronic components. Therefore in spite of the fact that analog stage will profit by placing these active components as close to the braking pad as possible, this would not be possible without a good thermal decoupling. Then the active analog stage 102 is placed either on the cable 100 or into the flying part 6b of the connector 6, provided that they are far apart enough (at least 2-3 cm) to lower the temperature and, to improve the thermal decoupling, suitable thermal barrier materials can be included in such flying part 6b of the connector 6 to improve thermal insulation.

The power for the active analog stage 102 is from either the ECU 101 if there is a wired connection between analogic stage and digital stage of the conditioner or from an on board battery if there is a wireless connection between analogic stage and digital stage of the conditioner . The ground for the second stage 102 of the analog stage is the same of the vehicle to avoid current loops.

The digital stage is included in a ECU (Electronic Central Unit) 101.

ECU 101 may be a stability control unit, a traction control unit or a brake control unit of the vehicle.

The digital stage comprises two distinct processing stages.

The first processing stage of the digital stage comprises a digitization stage 108 and an integrator stage 103.

The digitization stage 108 includes a digitizer while the integrator stage 103 includes a numerical integrator for integration in the time of the raw signal (from when the braking application start, to the end). This latter part is the digital equivalent of a charge amplifier circuit but done fully in digital instead through an electronic analog circuit.

The second processing stage of the digital stage comprises instead a low frequency (virtually equal to zero) filter 104, which removes all these components that do not have any physical meaning and must be removed to avoid signal drift issues.

This latter point is not possible with standard charge amplifier approach which involves integration of all the charge, noise-induced included, passing through the piezoceramic sensor and henceforth having serious signal drift issues.

With the adoption of the passive circuit plus the digital processing stage the low frequency components are naturally decoupled.

Indeed the signal passing into the circuit is a time derivative of the charge stored into the piezoceramic sensor, then the raw signal in the frequency space is $j\omega Q(\omega)$, and is equal to zero at $\omega = 0$.

Then it will be easy to remove from the raw signal any component at $\omega=0$ that would have induced a drift on the integration process with time.

This is one of the biggest advantage of this approach over the charge amplifier.

## Claims

1. A braking device (1) for vehicles, comprising a support element (2), a block of friction material (3) supported by the support element (2), and electrically isolated electrical circuit (4) that has at least one piezoceramic sensor (5) and is interposed between the block of friction material (3) and the support element (2), **characterized in that** it comprises a conditioner for conditioning the electrical signal of said at least one piezoceramic sensor (5) comprising a passive analog stage for measurement and a processing digital stage for processing the output signal from said passive analog stage, said passive analog stage comprises a charge derivative electrical circuit and **in that** said processing digital stage is a stage for digitization and integration of the output signal from said passive analog stage, said passive analog stage for measurement is integrated in an electric cable connector of said electrical circuit for transferring said electrical signal or in said cable, said processing digital stage being remotely located from said passive analog stage, said conditioner comprises an analog stage and a digital stage, said analog stage comprising said passive analog stage and an active analog stage integrated in said cable or in said connector, said active analog stage comprising at least a buffer in a decoupling inverting configuration, said digital stage comprising said processing digital stage.

2. A braking device for vehicles according to claim 1, **characterized in that** said analog stage and said digital stage are connected through said cable and through a wireless communication channel.

3. A braking device for vehicles according to claim 1, **characterized in that** said charge derivative circuit comprises a resistor set in parallel with the piezoceramic sensor.

4. braking device for vehicles according to claim 1, **characterized in that** said charge derivative circuit further comprises an AC coupling capacitance between the piezoceramic sensor and said resistor.

5. A braking device for vehicles according to claim 1, **characterized in that** said digital stage comprises a software device for the numerical integration of the digitized signal.

6. A braking device for vehicles according to claim 1, **characterized in that** said digital stage comprises a hardware device for the integration of the digitized signal.

7. A braking device for vehicles according to claim 1, **characterized in that** said processing digital stage is integrated in an electronic control unit of the vehicle.

8. A braking device for vehicles according to any claim 1 to 7, **characterized in that** said digital stage comprises a further processing digital stage including a low frequency filter.

**Patentansprüche**

1.  Bremsvorrichtung (1) für Fahrzeuge, umfassend ein Trägerelement (2), einen von dem Trägerelement (2) getragenen Block aus Reibmaterial (3) und eine elektrisch isolierte elektrische Schaltung (4), die zumindest einen piezokeramischen Sensor (5) aufweist und zwischen dem Block aus Reibmaterial (3) und dem Trägerelement (2) angeordnet ist,
    **dadurch gekennzeichnet, dass** sie einen Konditionierer zum Konditionieren des elektrischen Signals des zumindest einen piezokeramischen Sensors (5) umfasst,
    umfassend eine passive Analogstufe zur Messung und eine verarbeitende Digitalstufe zur Verarbeitung des Ausgangssignals von der passiven Analogstufe, wobei die passive Analogstufe eine elektrische Schaltung zur Ladungsableitung umfasst und dass die verarbeitende Digitalstufe eine Stufe zur Digitalisierung und Integration des Ausgangssignals von der passiven Analogstufe ist, wobei die passive Analogstufe zur Messung in einen elektrischen Kabelanschluss der elektrischen Schaltung zur Übertragung des elektrischen Signals oder in das Kabel integriert ist, wobei die verarbeitende Digitalstufe von der passiven Analogstufe entfernt angeordnet ist, wobei der Konditionierer eine Analogstufe und eine Digitalstufe umfasst, wobei die Analogstufe die passive Analogstufe und eine aktive Analogstufe umfasst, die in dem Kabel oder in dem Verbinder integriert ist, wobei die aktive Analogstufe zumindest einen Puffer in einer entkoppelnden invertierenden Konfiguration umfasst, wobei die Digitalstufe die verarbeitende Digitalstufe umfasst.

2.  Bremsvorrichtung für Fahrzeuge nach Anspruch 1, **dadurch gekennzeichnet, dass** die Analogstufe und die Digitalstufe über das Kabel und über einen drahtlosen Kommunikationskanal verbunden sind.

3.  Bremsvorrichtung für Fahrzeuge nach Anspruch 1, **dadurch gekennzeichnet, dass** die Ladungsableitungsschaltung einen Widerstand umfasst, der parallel zu dem piezokeramischen Sensor geschaltet ist.

4.  Bremsvorrichtung für Fahrzeuge nach Anspruch 1, **dadurch gekennzeichnet, dass** die Ladungsableitungsschaltung ferner eine Wechselstrom-Kopplungskapazität zwischen dem piezokeramischen Sensor und dem Widerstand umfasst.

5.  Bremsvorrichtung für Fahrzeuge nach Anspruch 1, **dadurch gekennzeichnet, dass** die digitale Stufe eine Softwareeinrichtung für die numerische Integration des digitalisierten Signals umfasst.

6.  Bremsvorrichtung für Fahrzeuge nach Anspruch 1, **dadurch gekennzeichnet, dass** die digitale Stufe eine Hardwareeinrichtung zur Integration des digitalisierten Signals umfasst.

7.  Bremsvorrichtung für Fahrzeuge nach Anspruch 1, **dadurch gekennzeichnet, dass** die verarbeitende Digitalstufe in eine elektronische Steuereinheit des Fahrzeugs integriert ist.

8.  Bremsvorrichtung für Fahrzeuge nach einem der Ansprüche 1 bis 7, **dadurch gekennzeichnet, dass** die Digitalstufe eine weiterverarbeitende Digitalstufe, einschließlich eines Niederfrequenzfilters, umfasst.


**Revendications**

1.  Dispositif de freinage (1) pour véhicules, comprenant un élément de support (2), un bloc de matériau de friction (3) supporté par l'élément de support (2) et un circuit électrique isolé électriquement (4), qui présente au moins un capteur piézocéramique (5) et qui est interposé entre le bloc de matériau de friction (3) et l'élément de support (2),
    **caractérisé en ce qu'**il comprend un conditionneur destiné à conditionner le signal électrique dudit au moins un capteur piézocéramique (5) comprenant un étage analogique passif pour la mesure et un étage numérique de traitement pour le traitement du signal de sortie dudit étage analogique passif, ledit étage analogique passif comprend un circuit électrique en dérivation de charge et **en ce que** ledit étage numérique de traitement est un étage pour la numérisation et l'intégration du signal de sortie dudit étage analogique passif, ledit étage analogique passif pour la mesure est intégré dans un connecteur de câble électrique dudit circuit électrique pour transférer ledit signal électrique ou dans ledit câble, ledit étage numérique de traitement étant situé à distance dudit étage analogique passif, ledit conditionneur comprend un étage analogique et un étage numérique, ledit étage analogique comprenant ledit étage analogique passif et un étage analogique actif intégré dans ledit câble ou dans ledit connecteur, ledit étage analogique actif comprenant au moins un tampon dans une configuration d'inversion de découplage, ledit étage numérique comprenant ledit étage numérique de traitement.

**2.** Dispositif de freinage pour véhicules selon la revendication 1, **caractérisé en ce que** ledit étage analogique et ledit étage numérique sont connectés par l'intermédiaire dudit câble et par l'intermédiaire d'un canal de communication sans fil.

**3.** Dispositif de freinage pour véhicules selon la revendication 1, **caractérisé en ce que** ledit circuit de dérivation de charge comprend une résistance montée en parallèle avec le capteur piézocéramique.

**4.** Dispositif de freinage pour véhicules selon la revendication 1, **caractérisé en ce que** ledit circuit de dérivation de charge comprend en outre, un condensateur de couplage AC entre le capteur piézocéramique et ladite résistance.

**5.** Dispositif de freinage pour véhicules selon la revendication 1, **caractérisé en ce que** ledit étage numérique comprend un dispositif logiciel pour l'intégration numérique du signal numérisé.

**6.** Dispositif de freinage pour véhicules selon la revendication 1, **caractérisé en ce que** ledit étage numérique comprend un dispositif matériel pour l'intégration du signal numérisé.

**7.** Dispositif de freinage pour véhicules selon la revendication 1, **caractérisé en ce que** ledit étage numérique de traitement est intégré dans une unité de commande électronique du véhicule.

**8.** Dispositif de freinage pour véhicules selon l'une quelconque des revendications 1 à 7, **caractérisé en ce que** ledit étage numérique comprend un autre étage numérique de traitement incluant un filtre basse fréquence.

EP 3 303 870 B1

FIG. 1

FIG. 2

FIG. 3

10

FIG. 4

FIG. 5A

SENSORIZED BRAKE PAD

BACKPLATE   CONNECTOR

| SENSOR(S) | PASSIVE AFE | ACTIVE AFE |

**5**   **106**   **2**   **102**   **6**

**1**

CABLE

**100**

ECU

| DIGITIZER | DIGITAL INTEGRATION | LOW FREQUENCY NOISE FILTERING | BRAKE PAD DATA |

**108**   **103**   **104**

**101**

## FIG. 5B

SENSORIZED BRAKE PAD

CONNECTOR

| SENSOR(S) | PASSIVE AFE | ACTIVE AFE |

**5**   **106**   **102**   **6**

**1**

CABLE

**100**

ECU

| DIGITIZER | DIGITAL INTEGRATION | LOW FREQUENCY NOISE FILTERING | BRAKE PAD DATA |

**108**   **103**   **104**

**101**

## FIG. 5C

FIG. 5D

FIG. 5E

SENSORIZED BRAKE PAD

ECU

**109**

CONNECTOR

**2**

TRANSMITTER

WIRELESS SIGNAL

RECEIVER

BACKPLATE

BATT

**111**

**110**

SENSOR(S)

PASSIVE AFE

ACTIVE AFE

**FIG. 5F**

**5**   **1**    **106**    **6**    **102**     **101**

SENSORIZED BRAKE PAD

ECU

**6**

CONNECTOR

**109**

TRANSMITTER

WIRELESS SIGNAL

RECEIVER

BACKPLATE

BATT

**111**

**110**

SENSOR(S)

PASSIVE AFE

ACTIVE AFE

**5**   **106**    **102**

**1**

**FIG. 5G**

**101**

**FIG. 6**

**FIG. 7**

**FIG. 8**

FIG. 9a

FIG. 9b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT TO20130307 A
- JP H1194707 B
- US 2014311833 A